# FASCICULE DE BREVET EUROPEEN

(11) **EP 4 615 226 B1**
(45) Date de publication et mention de la délivrance du brevet: **19.08.2026**
(21) Numéro de dépôt: 23809708.3
(22) Date de dépôt: 08.11.2023
(51) Int. Cl.: A01K 61/60

(54) **DISPOSITIF D'ELEVAGE AQUACOLE DE TYPE CAGE FERMEE, COMPRENANT DES STRUCTURES ANNULAIRES EMBOITABLES RELIEES PAR DES PORTIONS DE MEMBRANE EN FORME D'HYPERBOLOÏDES DE REVOLUTION**
AQUAKULTUR-LANDEVORRICHTUNG MIT GESCHLOSSENEM KÄFIG, DIE INEINANDERSETZBARE RINGFÖRMIGE STRUKTUREN UMFASST, DIE DURCH MEMBRANTEILE IN FORM VON HYPERBOLOIDEN DER UMDREHUNG VERBUNDEN SIND
CLOSED-CAGE AQUACULTURE FARMING DEVICE COMPRISING NESTABLE ANNULAR STRUCTURES CONNECTED BY MEMBRANE PORTIONS IN THE SHAPE OF HYPERBOLOIDS OF REVOLUTION

(30) Priorité: 09.11.2022 FR 2211699
(43) Date de publication de la demande: 17.09.2025
(73) Titulaire: Serge Ferrari SAS, 38110 Saint Jean de Soudain (FR)
(72) Inventeur: GATEFF, Jean-Paul, 83400 HYERES (FR)
(74) Mandataire: Ipsilon
(86) Numéro de dépôt international: PCT/FR2023/051753
(87) Numéro de publication internationale: WO 2024/100358

(56) Documents cités:
- EP-B1- 0 824 310
- WO-A1-2018/232543
- WO-A1-2019/035719
- NO-A1- 20 210 567
- US-B2- 10 064 396

## Description

### DOMAINE TECHNIQUE

La présente invention se rapporte à un dispositif d'élevage aquacole de type cage fermée, utilisable par exemple pour l'élevage piscicole en milieu marin, fluvial ou lacustre.

Ce type de dispositif permet de créer une zone d'élevage fermée, préférentiellement de grande taille et par exemple d'une capacité de plusieurs dizaines de milliers de mètres cubes, pouvant être directement implantée dans le milieu aquatique naturel, tout en restant isolé de celui-ci. Il permet d'y faire croitre des algues ou d'y élever des animaux aquatiques, tels que des poissons, des crustacés ou des mollusques, jusqu'à ce qu'ils atteignent une taille commercialisable.

### ART ANTERIEUR

Pour pratiquer l'aquaculture, on a classiquement utilisé dans l'art antérieur des cages dites ouvertes. Il s'agit d'enclos de grande taille, placés dans un milieu aquatique naturel, tel que la mer, une rivière, un lac ou un étang. Cet enclos est généralement composé d'un anneau flottant à la surface, par exemple grâce à un ensemble de bouées, auquel est attaché un filet servant de paroi à l'enclos et dont le fond est lesté. L'eau peut ainsi passer à travers les mailles du filet, ce qui assure un renouvellement naturel de l'eau de l'enclos, tandis que les poissons élevés à l'intérieur ne peuvent s'en échapper.

Bien que simples et peu coûteuses, ces cages ouvertes présentent un grand nombre d'inconvénients. En effet, en raison de leur caractère ouvert, elles autorisent de nombreux échanges avec le milieu extérieur, ce qui présente des risques tant pour les poissons élevés à l'intérieur, que pour le milieu environnant.

Les poissons présents dans la cage peuvent notamment être la cible de prédateurs réussissant à se faufiler à travers les mailles du filets ou plongeant à travers la surface ouverte comme les goélands par exemple. En outre, ils ne sont pas protégés des parasites (poux de mer notamment) et microorganismes pathogènes naturellement présents dans l'eau de faible profondeur et auxquels ils sont particulièrement sensibles en raison de la promiscuité régnant à l'intérieur de la cage. Cela pose un problème du point de vue du bien-être animal et représente un coût financier important pour les exploitants en raison de la mortalité liée aux maladies et des traitements contre celles-ci et contre les parasites.

De plus, l'écosystème à l'extérieur de la cage se retrouve pollué par la grande quantité d'effluents provenant des déjections, débris de nourriture et poissons morts, qui retombent en dehors de la cage sans être retraités, et provoquent une augmentation importante des concentrations locales de phosphore et d'azote favorisant le développement d'algues toxique. L'eau environnante peut également être polluée par les produits chimiques, hormones de croissance et antibiotiques souvent utilisés en aquaculture.

Les populations locales de poissons peuvent également souffrir du contact avec les poissons élevés en cage, car les maladies et les parasites, plus fréquents chez les poissons captifs du fait de la promiscuité, peuvent se propager aux poissons sauvages. En cas de dommages accidentels sur les filets par exemple liés à des prédateurs, des poissons d'élevage peuvent également réussir à s'échapper et entrer en compétition avec les espèces locales pour la nourriture ou perturber leur reproduction et devenir invasive.

Pour toutes ces raisons, on a plus récemment développé des cages d'aquaculture dites fermées, qui sont des structures à parois latérale et inférieure étanches. Ainsi, la zone d'élevage à l'intérieur de la cage et le milieu extérieur sont complètement isolés l'un de l'autre, ce qui limite les contaminations respectives et la pollution.

Les cages d'élevages fermées permettent des améliorations notables sur la mortalité des poissons d'élevage, car ils sont mieux protégés des prédateurs et des parasites tels que les poux de mers. En outre, la qualité de l'eau à l'intérieur de la cage et son degré d'oxygénation peuvent être contrôlés, ainsi que les quantités de nourriture et de produits de traitement injectés dans la cage pour obtenir une croissance optimale des poissons.

La pollution de l'environnement extérieur est également considérablement limitée car les déchets produits à l'intérieur de la cage peuvent être collectés et retraités et le contact entre les poissons sauvages et les poissons captifs est évité.

L'invention se place dans le cadre de ces cages d'élevage aquacole dites fermées.

Cependant, lorsqu'elles sont immergées, ces cages fermées sont soumises à de fortes sollicitations mécaniques en raison de la pression de l'eau qui s'exerce sur leurs parois, ainsi que de la houle et des courants aquatiques parfois très importants en mer ou dans les rivières. Pour résister à la pression sans s'écraser et conserver leur forme malgré la houle et les courants, les cages fermés classiques sont le plus souvent réalisées dans des matériaux rigides très résistants, tels que du béton ou des fibres de verre. De ce fait, elles sont très onéreuses, extrêmement lourdes, volumineuses et encombrantes. Elles sont donc particulièrement difficiles à stocker, à transporter et à mettre en place.

En outre, une fois mise en place à leur emplacement de fonctionnement, ces cages doivent être remplies d'eau par le dessus au moyen de pompes, pendant de nombreuses heures, avant de pouvoir être utilisées.

Des cages fermées à paroi souple, moins lourdes et plus facilement manipulables, ont également été proposées dans l'art antérieur. Un exemple de cage fermée est décrit dans le document NO20210567A1. Une telle cage comporte une paroi externe réalisée à partir d'une membrane en textile dense, qui épouse une forme générale conique maintenue pas la coopération de structures annulaires rigides. Cette cage est équipée d'un filet d'extraction des poissons, qui peut être relevé au niveau d'une ouverture de la cage en partie haute.

Grâce à leur souplesse, les cages fermées ont également une meilleure capacité à absorber l'énergie des vagues et des courants sans se rompre.

Cependant, pour résister à la déformation liée aux courants et conserver une forme stable avec un volume interne important, elles doivent constamment se trouver en surpression par rapport à l'eau qui les entoure et dans laquelle elles sont immergées. Cela impose de remplir la cage au moyen d'un système de pompage qui fonctionne en continu pour assurer une hauteur d'eau plus importante à l'intérieur de la cage qu'à l'extérieur, et ceci malgré le renouvellement de l'eau et la mise en mouvement de celle-ci qui sont nécessaires au bien-être des poissons captifs et qui impliquent d'évacuer en continu une partie de l'eau se trouvant dans la cage.

En outre, tout comme les cages fermées rigides, ces cages fermées à paroi souple mises en place à l'état vide à leur emplacement de fonctionnement, et doivent être remplies d'eau par des pompes, une fois installées. Or, tant que le remplissage n'est pas terminé et suffisant pour assurer une surpression interne, leur paroi souple ballote dans le courant et les vagues pendant des heures, au risque d'être gravement endommagée comme cela a pu se produire dans l'art antérieur.

### EXPOSE DE L'INVENTION

La cage aquacole fermée selon l'invention pallie les inconvénients de ses dispositifs antérieurs à paroi souple, sans présenter les désavantages des cages rigides antérieures.

En effet, grâce à la configuration spécifique de ses portions de membrane en forme de tronçons d'hyperboloïde de révolution, elle présente une forme auto-stable par gravité lorsqu'elle est déployée, qui lui permet de résister à la pression de l'eau environnante et aux fortes sollicitations liées à la houle et au courant, sans qu'il soit nécessaire de la maintenir en surpression.

En outre, grâce à sa structure emboîtable, elle peut avantageusement être repliée avec une hauteur limitée lorsqu'elle n'est pas utilisée, ce qui facilite grandement son stockage et son transport.

Enfin, dans le cas préférentiel où elle comporte un élément d'obturation amovible ou susceptible d'être ouvert lors de la mise en place de la cage, elle est avantageusement auto-remplissable. C'est-à-dire que, lors de sa mise en place, l'eau pénètre naturellement à l'intérieur de la cage à travers l'ouverture laissée libre par cet élément d'obturation et la remplit automatiquement lors de son déploiement. Le remplissage de la cage est ainsi beaucoup plus rapide qu'avec le système de pompage des cages à paroi souple de l'art antérieur et donc beaucoup moins risqué pour la membrane.

L'invention enseigne un dispositif d'élevage aquacole de type cage fermée qui peut être alternativement replié pour son stockage ou son transport, ou déployé pour son utilisation.

Ce dispositif comprend :
- au moins quatre structures annulaires de diamètre différents, dont une structure annulaire supérieure, une structure annulaire médiane haute, une structure annulaire médiane basse et une structure annulaire inférieure, ces structures étant emboîtables les unes dans les autres à l'état replié du dispositif et étant disposées coaxialement l'une au-dessus de l'autre à l'état déployé du dispositif ;
- au moins trois portions de membrane imperméables à l'eau, dont une portion de membrane supérieure, une portion de membrane médiane et une portion de membrane inférieure, qui relient chacune deux structures annulaires consécutives et se succèdent de manière étanche, chacune de ces portions de membrane présentant la forme d'un tronçon d'hyperboloïde de révolution à l'état déployé du dispositif ; et
- un élément d'obturation qui ferme le dispositif en partie inférieure.

L'ensemble de ces portions de membrane et de l'élément d'obturation délimite un volume central creux apte à contenir de l'eau et à servir de zone d'élevage aquacole.

Grâce à leurs diamètres différents, les structures annulaires peuvent avantageusement être placées les unes dans les autres de façon gigogne et par exemple concentrique, lorsque le dispositif est hors de l'eau.

Les portions de membranes qui relient les structures annulaires deux à deux peuvent alors s'intercaler entre les anneaux en étant chacune repliée sur elle-même, par exemple sensiblement en accordéon, et ce malgré leur foisonnement.

Lorsqu'il est posé sur une surface plane, le dispositif selon l'invention n'occupe alors qu'une hauteur limitée du fait de sa structure emboîtable. Il est ainsi beaucoup moins volumineux et encombrant que les structures de l'art antérieur, ce qui facilite grandement son stockage, son transport et sa manipulation.

Selon un mode de réalisation de l'invention, la structure annulaire supérieure, la structure annulaire médiane haute, la structure annulaire médiane basse et la structure annulaire inférieure ont chacune, indépendamment les unes des autres, dans leur plan principal, une forme circulaire ou polygonale ou correspondant à une portion de cercle suivie d'au moins un segment droit, mais présentent chacune une interface de fixation circulaire des portions de membranes correspondantes.

Les structures annulaires peuvent ainsi présenter une forme générale qui n'est pas parfaitement circulaire, mais qui peut être partiellement ou totalement polygonale, par exemple pour simplifier leur fabrication ou pour faciliter leur lestage ou encore pour réaliser une fonction supplémentaire, par exemple servir de flanc d'accostage pour les bateaux en ce qui concerne la structure annulaire supérieure.

Elles conservent malgré tout une interface de fixation avec la membrane qui reste circulaire, afin de répartir au mieux les efforts s'exerçant sur la membrane de manière homogène sur toute sa circonférence. Cette interface peut être directement intégrée au reste de la structure annulaire ou être reliée à celui-ci par exemple au moyen d'un ensemble de bras de fixation de longueur variable adapté pour obtenir la forme circulaire de l'interface.

Selon un mode de réalisation de l'invention, les diamètres des structures annulaires médiane basse et médiane haute sont supérieurs aux diamètres des structures annulaires inférieure et supérieure.

De ce fait, les structures annulaires médianes basse et haute garantissent entre elles un volume central important, bordé latéralement par la portion de membrane médiane et définissent ainsi une zone d'élevage de grandes dimensions.

Au contraire, les structures annulaires inférieure et supérieure sont avantageusement plus petites, ce qui permet à la structure supérieure d'être moins visible à la surface de l'eau pour limiter la pollution visuelle et d'autre part d'être moins exposée à l'impact des vagues et des clapotis de surface et d'avoir une trainée aux vents plus faible.

En outre, la taille inférieure de la structure annulaire inférieure par rapport à celle de la structure annulaire médiane basse permet de créer une pente convergeant vers le bas qui favorise la collecte naturelle et l'accumulation en partie basse par sédimentation des déchets produits à l'intérieur du dispositif. Ils peuvent ainsi être facilement évacués, par exemple par un système d'aspiration, ce qui limite la pollution et permet de garder propre l'eau de la zone d'élevage principale située entre les structures annulaires médianes basse et haute.

Selon un mode de réalisation de l'invention, en utilisation, la structure annulaire supérieure et la structure annulaire médiane haute sont des structures à densité inférieure à celle de l'eau, tandis que la structure annulaire médiane basse et la structure annulaire inférieure sont des structures à densité supérieure à celle de l'eau.

Lorsqu'elles sont placées seules dans l'eau, les structures annulaires supérieure et médiane haute sont donc capable de flotter et on les définira au sens de l'invention comme étant à flottabilité positive.

Au contraire, lorsque les structures annulaires médiane basse et inférieure sont placées seule dans l'eau, elles sont incapables de flotter et coulent. On les définira au sens de l'invention comme étant à flottabilité négative.

Cette flottabilité négative peut être obtenue par la nature des structures annulaires médiane basse et inférieure qui peuvent être choisies suffisamment lourdes et denses en elles-mêmes pour être intrinsèquement à flottabilité négative.

Elle peut également être obtenue en ajoutant du lest ou des poids dans ou sur lesdites structures annulaires. On peut ainsi par exemple remplir les structures annulaires avec des granulats minéraux ou métalliques, ou y accrocher des contre-poids en béton ou en fonte, jusqu'à atteindre la valeur de densité souhaitée.

De plus, l'ensemble de ces structures annulaires est préférentiellement ballastable positivement ou négativement.

Grâce à ces différences de densité entre les structures annulaires, il est possible de garantir un déploiement complet et une mise sous tension verticale de l'ensemble du dispositif, chacune des portions de membrane étant entièrement déployée et tendue verticalement entre les deux structures annulaires auxquelles elle est reliée.

Selon un mode de réalisation de l'invention, les portions de membranes sont en étoffe textile associée à une couche polymérique.

L'étoffe textile peut être de nature appropriée quelconque. Il peut s'agir par exemple d'un tissu, d'une nappe multiaxiale (appelée Non-Crimp Fabric ou NCF en anglais), d'un textile tricoté ou non-tissé.

La couche polymérique permet de rendre le textile de la membrane étanche à l'eau en venant boucher les mailles du textile ou au moins en limiter la taille pour que les parasites ne puissent pas le traverser. Il s'agit par exemple d'une couche de PVC ou de tout autre polymère approprié. L'application de cette couche polymérique sur le textile est par exemple réalisée par un procédé d'enduction polymérique ou de lamination composite.

Selon un mode de réalisation de l'invention, le dispositif d'élevage aquacole comporte en outre des armatures ou des câbles qui relient au moins deux structures annulaires entre elles.

Ces câbles ou armatures peuvent relier directement les deux structures annulaires, qui sont préférentiellement consécutives, pour les maintenir en position l'une par rapport à l'autre et rigidifier le dispositif.

Ils peuvent également servir à renforcer une ou plusieurs portions de membrane. Dans ce cas, ils sont liés ou intégrés à ladite portion de membrane, par exemple en passant à l'intérieur d'un ou plusieurs fourreaux de tissus.

Ces câbles ou armatures peuvent être métalliques ou sont préférentiellement en fibres synthétiques à haute performances mécaniques. Il peut s'agir par exemple de liens en fibres de polyéthylène de masse molaire très élevée (UHMPE ou UHMWPE pour « Ultra High Molecular Weight Polyethylene » en anglais), telles que les fibres SPECTRA^{™} commercialisées par la société Honeywell ou DYNEEMA^{™} commercialisées par la société DSM.

Selon un mode de réalisation de l'invention, le dispositif d'élevage aquacole comporte en outre un ensemble de lignes d'ancrage permettant de fixer le dispositif au sol subaquatique. Le dispositif d'élevage selon l'invention est ainsi amarré au fond sous-marin afin de l'immobiliser spatialement.

Ces lignes d'ancrage sont préférentiellement fixées à la structure annulaire médiane haute, ou alternativement pour certaines à la structure annulaire médiane haute et pour d'autres à la structure annulaire médiane basse, qu'elles viennent de préférence entourer par cravatage.

Selon un mode de réalisation de l'invention, le dispositif d'élevage aquacole comporte en outre une machine de nourrissage, qui permet d'alimenter automatiquement et de façon contrôlée les animaux captifs.

Selon un mode de réalisation de l'invention, le dispositif d'élevage aquacole comprend en outre au moins une pompe destinée à alimenter le volume central creux en eau aspirée à l'extérieur du dispositif. Il comprend également au moins une bouche d'évacuation d'eau située dans une portion de membrane ou dans l'élément d'obturation afin de limiter la surpression à l'intérieur du dispositif. Cette bouche d'évacuation d'eau est préférentiellement prolongée par un tube s'étendant à l'extérieur de la portion de membrane ou de l'élément d'obturation.

Il est ainsi possible de renouveler facilement l'eau se trouvant à l'intérieur de la zone d'élevage, ce qui est très important pour le bien-être des animaux captifs.

Selon une variante préférentielle de ce mode de réalisation de l'invention, le dispositif d'élevage aquacole comprend en outre au moins une colonne de distribution qui, à l'état déployé du dispositif, est liée à au moins une structure annulaire, de préférence la structure annulaire supérieure, et qui s'étend dans le volume central creux, cette colonne de distribution recevant l'eau aspirée par la pompe et comportant des ouvertures, de préférence à différentes hauteurs, à travers lesquelles ladite eau sort de la colonne de distribution pour aller dans le volume central creux.

Selon les variantes, le dispositif d'élevage peut comporter une ou plusieurs colonnes de distribution, réparties dans le volume central creux pour distribuer l'eau fraiche de manière optimale. Ces colonnes de distribution peuvent s'étendre verticalement ou être disposées de façon inclinée.

Selon une variante préférentielle de ce mode de réalisation, lesdites ouvertures sont équipées de buses ou d'injecteurs qui sont orientés de manière à envoyer ladite eau dans le volume central creux avec un mouvement rotationnel, et/ou, le dispositif peut comporter en outre au moins un propulseur fixé à une portion de membrane et prévu pour conférer un mouvement rotationnel à l'eau se trouvant dans le volume central creux.

Une mise en mouvement de l'eau présente dans le volume central creux servant de zone d'élevage est en effet bénéfique pour la santé des animaux captifs en leur permettant de faire de l'exercice, ce qui favorise leur croissance et améliore la qualité de leur chair.

Selon un mode de réalisation de l'invention, la colonne de distribution, ou au moins une des colonnes de distribution si le dispositif en comporte plusieurs, comprend une partie supérieure flottante, qui renferme préférentiellement une machine de nourrissage.

Selon un mode de réalisation de l'invention, la colonne de distribution, ou au moins une des colonnes de distribution, s'étend sensiblement verticalement dans le volume central creux et comporte une partie principale tubulaire formée d'une succession de tronçons chacun en forme d'hyperboloïde de révolution.

Chacun de ces tronçons présente ainsi une forme auto-stable lui permettant de résister à la pression de l'eau environnante et aux sollicitations dues à la houle ou aux courants.

Selon un mode de réalisation de l'invention, l'élément d'obturation est une jupe qui s'étend de la partie inférieure de ladite colonne de distribution à la structure annulaire inférieure.

Cette jupe peut être souple ou rigide. Elle est préférentiellement accrochée de façon amovible à la structure annulaire inférieure ou à la colonne de distribution, de manière à constituer un élément d'obturation ouvrable et refermable. Elle peut ainsi n'être accrochée qu'une fois le dispositif d'élevage déployé et rempli.

Selon un mode de réalisation de l'invention, la partie inférieure de la portion de membrane inférieure et l'élément d'obturation sont orientés de manière à former des rampes inclinées vers le bas qui convergent l'une vers l'autre, créant ainsi une zone de collecte et de sédimentation des effluents. Cette zone de collecte peut avantageusement être équipée d'une gouttière de récupération et d'un système de pompage permettant d'évacuer les déchets récoltés.

Selon un mode de réalisation de l'invention, l'élément d'obturation est amovible ou susceptible d'être ouvert.

Grâce à cette configuration préférentielle avantageuse du dispositif selon l'invention, il est possible de ne pas mettre l'élément d'obturation ou de le laisser ouvert lors de la mise en place et du déploiement du dispositif d'élevage aquacole. On peut ainsi remplir directement et automatiquement le dispositif, grâce à l'entrée naturelle de l'eau dans le volume central creux au travers de la structure annulaire inférieure, l'élément d'obturation étant mis en place ou refermé par la suite, une fois la structure remplie et entièrement déployée.

Grâce à cette disposition préférentielle de l'invention, les portions de membrane sont automatiquement remplies d'eau dès leur déploiement et sont rapidement protégées du courant et de la pression par leur forme auto-stable en hyperboloïde de révolution.

Selon un mode de réalisation de l'invention, le dispositif d'élevage aquacole comporte un autre élément d'obturation qui ferme le dispositif en partie supérieure.

Cet élément d'obturation supérieur forme ainsi un couvercle sur le dessus du dispositif d'élevage aquacole, qui est préférentiellement amovible ou susceptible d'être ouvert et refermé.

Grace à cet élément d'obturation supérieur, il est possible de protéger les poissons contenus dans la cage des goélands ou autres oiseaux ou prédateurs susceptibles de passer par le haut de la cage. Il empêche également que de l'eau de surface, susceptible de contenir des parasites et notamment des poux de mer, puisse passer par-dessus la structure annulaire supérieure et entrer dans le volume central creux où se trouvent les poissons d'élevage, à cause de la houle ou des clapotis de surface.

Cet élément d'obturation supérieur permet également de refermer de manière étanche la partie supérieure de la cage, si l'on souhaite immerger complètement le dispositif d'élevage aquacole. Il est ainsi complètement invisible en surface et ne génère aucune pollution visuelle. En outre, il est ainsi protégé des remous et intempéries de la zone de surface qui est la zone la plus agitée.

### BREVE DESCRIPTION DES FIGURES

D'autres caractéristiques et avantages de l'invention apparaîtront à la lecture de la description détaillée qui va suivre, description faite en référence aux dessins annexés, dans lesquels :
La figure 1 est une vue latérale en perspective d'un exemple de dispositif d'élevage aquacole selon l'invention à l'état déployé ;
La figure 2 est une vue en perspective de dessus du dispositif d'élevage aquacole de la figure 1 ;
La figure 3 est une vue schématique en coupe longitudinale d'un autre exemple de dispositif d'élevage aquacole selon l'invention à l'état déployé, ce dispositif comprenant une colonne de distribution ;
La figure 4 est un agrandissement schématique du détail encerclé sur la figure 3 dans lequel un morceau de membrane n'a pas été représenté pour rendre visible le câble de renfort intégré dans la membrane ;
La figure 5 est une vue latérale schématique du dispositif d'élevage aquacole de la figure 1 à l'état replié, les portions de membrane n'étant pas représentées.

### DESCRIPTION DETAILLEE DE L'INVENTION

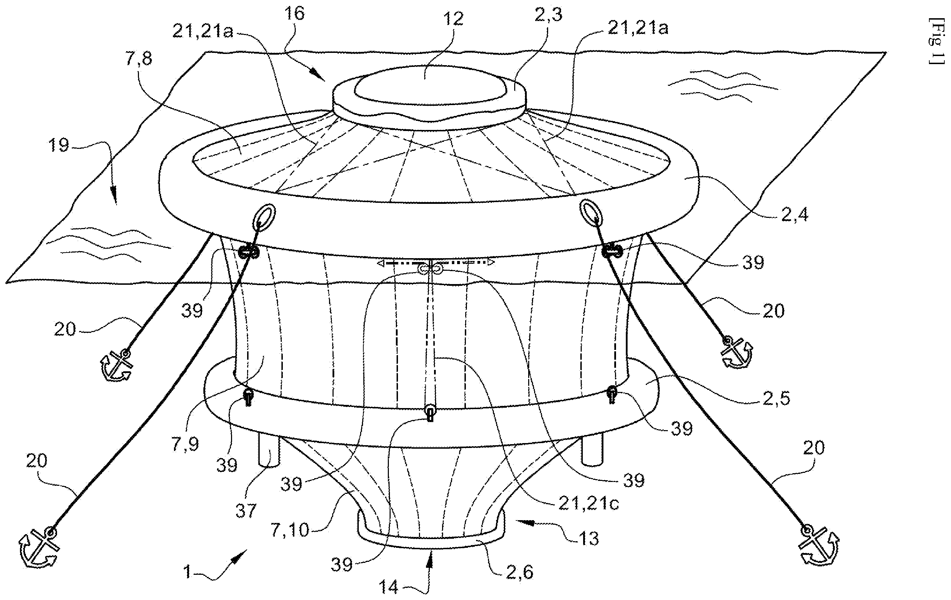

Le dispositif d'élevage aquacole selon la présente invention va maintenant être décrit de façon détaillée en référence aux figures 1 à 5. Les éléments équivalents représentés sur les différentes figures porteront les mêmes références numériques.

Comme énoncé précédemment, le dispositif d'élevage aquacole 1 comprend un ensemble de structures annulaires 2, qui sont au nombre de quatre dans les exemples représentés, dont une structure annulaire supérieure 3, une structure annulaire médiane haute 4, une structure annulaire médiane basse 5 et une structure annulaire inférieure 6.

Ces structures annulaires 2 sont reliées deux à deux par des portions de membrane 7, dont une portion de membrane supérieure 8 disposée entre la structure annulaire supérieure 3 et la structure annulaire médiane haute 4, une portion de membrane médiane 9 disposée entre la structure annulaire médiane haute 4 et la structure annulaire médiane basse 5, et une portion de membrane inférieure 10 disposée entre la structure annulaire médiane basse 5 et la structure annulaire inférieure 6.

Ces portions de membrane 7 sont imperméables à l'eau et se succèdent de manière étanche au niveau des structures annulaires 2. Elles peuvent être réalisées d'une seule pièce ou être liées les unes aux autres de façon définitive ou temporaire, par tout moyen approprié et notamment par couture, soudure notamment à chaud, par haute-fréquence ou par ultrasons, agrafage, accrochage... Deux portions de membrane 7 consécutives peuvent également être liées l'une à l'autre par l'intermédiaire de la structure annulaire 2 située entre les deux, à laquelle elles peuvent être accrochées. Dans tous les cas, l'étanchéité de la jonction doit être assurée, par exemple par un pli de tissu qui vient la recouvrir.

Bien que non représenté, le dispositif d'élevage aquacole 1 peut éventuellement comporter plus de quatre structures annulaires 2, et plus de trois portions de membrane 7. Lorsque le dispositif est de grande taille, il peut par exemple comporter cinq structures annulaires 2 et quatre portions de membrane 7, afin de diviser la portion de membrane médiane 9 en deux tronçons plus petits, moins lourds et plus faciles à manipuler.

L'ensemble de ces structures annulaires 2 et de ces portions de membrane 7 délimite à l'intérieur du dispositif 1 un volume central creux 11 pouvant servir de zone d'élevage.

Pour que l'eau contenue dans le dispositif et les animaux d'élevage ne s'échappent pas, un élément d'obturation 12 vient fermer le dispositif dans sa partie inférieure 13. Il vient ainsi boucher l'ouverture 14 au centre de la structure annulaire inférieure 6.

Cet élément d'obturation 12, peut être lié à la portion de membrane inférieure 10 de manière fixe, ou de préférence de façon ouvrable et refermable. Il peut encore être complètement amovible et préférentiellement mis en place une fois le dispositif d'élevage 1 entièrement déployé et rempli d'eau.

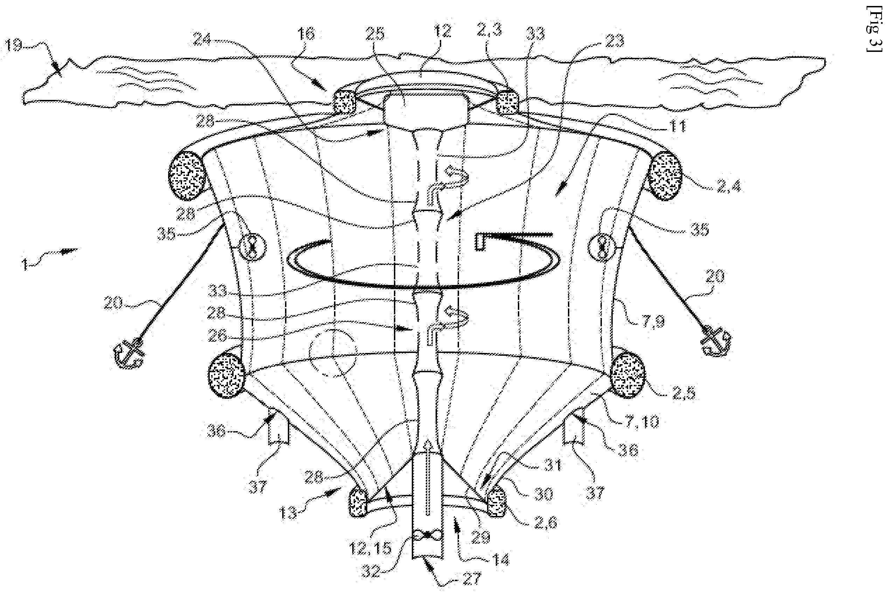

Un exemple d'un tel élément d'obturation 12 a été représenté sur la figure 3 sous la forme d'une jupe 15 de forme sensiblement tronconique.

De la même façon, un autre élément d'obturation 12 peut être optionnellement prévu en partie supérieure 16 du dispositif 1 pour boucher l'ouverture 17 se trouvant au centre de la structure annulaire supérieure 3, notamment si l'on souhaite immerger complètement le dispositif 1 ou protéger le volume central creux 11 de toute entrée indésirable d'eau de faible profondeur en raison de l'agitation de surface, ou encore protéger les animaux d'élevage des oiseaux.

Comme on peut le voir sur les figures 1 à 3 qui représentent le dispositif à l'état déployé, chacune des portions de membrane 7 présente la forme d'un tronçon d'hyperboloïde de révolution lorsqu'elle est déployée, c'est-à-dire tendue verticalement. Grâce à cette forme avantageuse qui est géométriquement très stable, elle peut résister à la pression de l'eau dans laquelle elle est immergée, à l'agitation de surface (houle, vagues, clapotis...), ainsi qu'aux courants aquatiques.

La forme en hyperboloïde de révolution de chacune de ces portions de membrane 7 peut être plus ou moins marquée, c'est-à-dire que le col de l'hyperboloïde, correspondant à la partie de l'hyperboloïde de plus faible diamètre, peut être plus ou moins resserré.

Plus on resserre le col de l'hyperboloïde, c'est-à-dire plus on diminue son diamètre, et plus on améliore la résistance de la portion de membrane 7 aux différentes sollicitations auxquelles elle doit résister (pression, courant, vagues...). Mais en contrepartie, on réduit en même temps la taille du volume central creux 11 qui sert de zone d'élevage.

L'homme du métier pourra aisément trouver, de façon empirique ou par calcul notamment par itération, un compromis acceptable entre le volume d'élevage nécessaire pour la quantité de poissons à élever et la résistance que doit présenter la membrane en fonction de l'importance des sollicitations qu'elle aura à subir selon son lieu d'implantation (zone calme ou agitée, courants faibles ou importants, profondeur...).

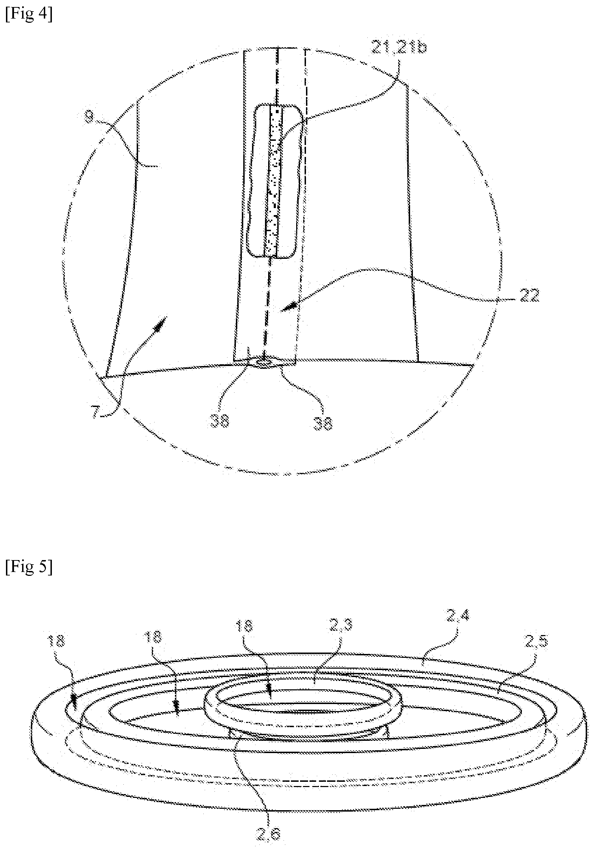

Chacune des structures annulaires 2 présente un diamètre différent. A l'état replié du dispositif 1, elles peuvent ainsi être disposées les unes dans les autres à la manière de structures gigognes concentriques comme représenté sur la figure 5. Les portions de membrane 7 (non représentées sur la figure 5) sont repliées sur elles-mêmes, par exemple sensiblement en accordéon, et viennent se loger dans les espaces intercalaires 18 situés entre deux structures annulaires 2 consécutives. L'ensemble du dispositif d'élevage 1 selon l'invention est ainsi beaucoup moins volumineux et présente une hauteur limitée. Il peut donc être stocké et transporté beaucoup plus facilement.

En utilisation, c'est-à-dire lorsque le dispositif est immergé, les structures annulaires 2 sont positionnées l'une en dessous de l'autre et les portions de membrane 7 sont déployées comme représenté sur les figures 1 à 3. Les densités relatives des différentes structures annulaires 2 sont préférentiellement choisies de manière à exercer une tension verticale sur chacune des portions de membranes 7 pour qu'elles soient parfaitement déployées et ainsi en forme d'hyperboloïde de révolution.

Ainsi par exemple, selon un mode de réalisation préférentiel, la structure annulaire supérieure 3 présente une flottabilité positive de manière à pouvoir flotter à la surface 19 de l'eau et assurer la flottabilité de l'ensemble.

La structure annulaire médiane haute 4 et la structure annulaire médiane basse 5 présentent des flottabilités de valeurs de sensiblement égales mais de sens inversés, la structure annulaire médiane haute 4 étant à flottabilité positive alors que la structure annulaire médiane basse 5 est à flottabilité négative. Ces deux structures annulaires 4 et 5 se compensent donc l'une l'autre, tout en garantissant que la portion de membrane médiane 9 soit tendue verticalement.

La structure annulaire inférieure 6 est également à flottabilité négative de manière à tirer l'ensemble du dispositif 1 vers le bas et ainsi à tendre verticalement la portion de membrane inférieure 10, mais également la portion de membrane supérieure 8 dont l'extrémité est maintenue en surface 19 par la structure annulaire supérieure 3.

Pour que l'ensemble reste flottant, la valeur de flottabilité de la structure annulaire supérieure 3 doit être supérieure à celle de la structure annulaire inférieure 6 qui est de sens inverse. Plus précisément, le bilan des masses, des flottabilités et de l'action verticale des lignes d'ancrage 20 doit être équilibré.

Mais la situation peut être différente selon les modes de réalisation. Si l'on souhaite par exemple que le dispositif d'élevage aquacole 1 soit entièrement immergé, on choisira pour la structure annulaire inférieure 6 une valeur de flottabilité sensiblement égale à celle de la structure annulaire supérieure 3 bien que de sens inverse, de manière qu'elles se compensent l'une l'autre et que l'ensemble reste en équilibre à une profondeur choisie.

Une fois immergé, le dispositif d'élevage aquacole 1 est maintenu en position par un ensemble de lignes d'ancrage 20 qui le relient au sol subaquatique et/ou éventuellement à la berge ou à la côte si elle est à proximité. Ces lignes d'ancrage 20 sont fixées à une ou plusieurs structures annulaires 2, de préférence en faisant tout le tour de la circonférence de la structure annulaire concernée selon la technique dite de cravatage.

Sur l'exemple représenté sur les figures, ces lignes d'ancrage 20 sont au nombre de quatre et sont toutes accrochées à la structure annulaire médiane haute 4. Bien entendu, de nombreux autres modes de réalisation sont possibles.

Comme représenté sur les figures 1 à 4, le dispositif 1 peut également comporter des câbles 21 qui relient deux structures annulaires 2 entre elles.

Ces câbles 21 peuvent avoir plusieurs fonctions différentes.

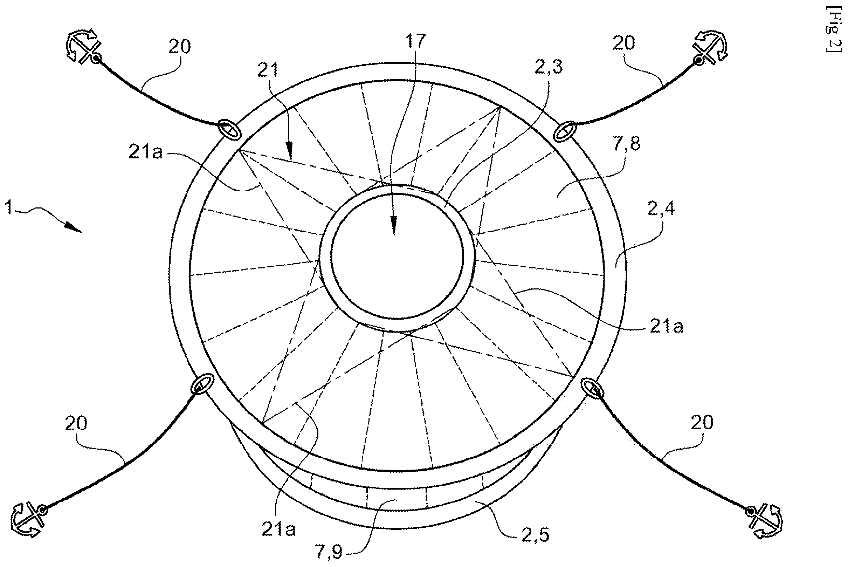

Ils peuvent servir à garantir le maintien et le positionnement relatif des structures annulaires 2 les unes par rapport aux autres, en leur laissant suffisamment de liberté pour qu'elles puissent s'adapter aux mouvements de l'eau, tout en s'opposant par exemple à leur rotation relative. C'est par exemple le cas des câbles 21a représentés sur les figures 1 et 2 qui relient la structure annulaire médiane haute 4 à la structure annulaire supérieure 3, en faisant le tour de la structure annulaire supérieure 3 selon la technique de cravatage.

Ces câble 21 peuvent également être intégrés à la membrane à la manière d'une armature, comme les câbles 21b représentés sur la figure 4, afin de renforcer la portion de membrane 7 concernée. Pour cela, les câbles 21b s'étendent préférentiellement dans un fourreau 22 ménagé dans la membrane 7 et formé par exemple par un repli de textile ou par le recouvrement de deux bordures 38 adjacentes, les câbles 21b étant ainsi prisonniers de la membrane 7.

De tels câbles 21 de renfort sont très utiles lorsque le dispositif d'élevage 1 est destiné à être implanté dans une zone où l'eau est très agitée ou bien dans une zone où s'exercent de forts courants. D'autres moyens de renfort des portions de membranes sont également envisageables, à la place ou en plus de ces câbles 21, comme par exemple une confection partielle ou complète en multi-plis.

Par ailleurs, l'utilisation des câbles de renfort 21 n'est pas forcément uniforme sur tout le dispositif d'élevage aquacole 1. Ces câbles peuvent être limités aux parties soumises aux contraintes les plus fortes, ou peuvent être plus nombreux ou plus robustes dans ces parties, comme par exemple au niveau de la portion de membrane supérieure 8 qui est la plus durement sollicitée par les perturbations de surface.

D'autre part, en renforçant la membrane, ces câbles 21 peuvent également permettre de choisir une membrane moins résistante, par exemple moins épaisse ou réalisée en une matière moins solide, mais qui en contrepartie sera moins couteuse.

Enfin, ces câbles 21 peuvent servir encore à éloigner ou rapprocher les structures annulaires 2 les unes par rapport aux autres, pour respectivement déployer le dispositif lors de sa mise en place, ou au contraire réduire la taille du volume central creux 11 pour faciliter la capture des animaux élevés à l'intérieur. C'est le cas du câble 21c, partiellement représenté sur la figure 1, qui permet à la manière d'un palan et à l'aide d'un ensemble de poulies 39 réparties sur la circonférence des structures annulaires médianes haute 4 et basse 5, de remonter la structure annulaire médiane basse 5 et de la rapprocher de la structure annulaire médiane haute 4 en tirant sur le câble 21c.

Comme illustré sur le mode de réalisation de la figure 3, le dispositif d'élevage aquacole 1 peut comporter une colonne de distribution 23 qui, sur l'exemple représenté, s'étend sensiblement verticalement, au centre du volume central creux 11.

Elle comprend une partie supérieure 24, qui est préférentiellement flottante et ballastable, et qui est rattachée à la structure annulaire supérieure 3 pour assurer son positionnement et son centrage par rapport à celle-ci. La partie supérieure 24 peut par exemple renfermer une machine de nourrissage 25.

La colonne de distribution 23 comprend également une partie principale tubulaire 26, creuse, qui s'étend sous la partie supérieure flottante 24 et sur quasiment toute la hauteur du dispositif d'élevage aquacole 1, et qui présente une ouverture 27 en partie inférieure débouchant à l'extérieur du dispositif d'élevage aquacole 1.

Sur l'exemple représenté, la partie principale tubulaire 26 est formée d'une succession de tronçons de membrane 28, chacun en forme d'hyperboloïde de révolution, afin d'améliorer sa résistance à l'écrasement et de garantir la stabilité de sa forme.

La colonne de distribution 23 est prolongée par une jupe 15, souple ou rigide, qui prend naissance, ou est rattachée, en partie inférieure de la colonne de distribution 23 et s'étend radialement vers l'extérieur jusqu'à la structure annulaire inférieure 6 à laquelle elle est fixée. Cette jupe 15 constitue ainsi l'élément d'obturation 12 qui vient fermer le bas du volume central creux 11 du dispositif 1.

Avantageusement, lorsqu'elle est rattachée à la structure annulaire inférieure 6, cette jupe 15 est orientée de manière à former une rampe inclinée vers le bas 29 qui converge vers la rampe inclinée vers le bas 30 formée en vis-à-vis par la partie inférieure de la portion de membrane inférieure 10, et coopère avec celle-ci pour créer à leur jonction une zone de collecte 31 des effluents de forme circulaire.

Afin d'assurer le renouvellement régulier de l'eau contenue dans le volume central creux 11, une ou plusieurs pompes 32 se trouvent dans la colonne de distribution 23 et aspirent l'eau extérieure à travers l'ouverture 27 de la partie principale tubulaire 26. Comme l'eau extérieure est prélevée en profondeur, elle est avantageusement exempte de parasites et notamment de poux de mer. Cette eau remonte dans la partie principale tubulaire 26 de la colonne de distribution 23, d'où elle est envoyée à travers une série d'ouvertures latérales 33, préférentiellement équipées d'injecteurs ou de buses, en direction du volume central creux 11 du dispositif 1.

Ces buses équipant les ouvertures latérales 33 sont préférentiellement orientées de manière à conférer un mouvement rotationnel au flux d'eau fraiche (symbolisé sur la figure 3 par les flèches épaisses) sortant de la colonne de distribution 23, lorsqu'il est envoyé dans le volume central creux 11. Cet effet est encore accentué par la présence d'un ou plusieurs propulseurs 35 dans le volume central creux 11, par exemple répartis sur la face intérieure de certaines portions de membrane 7, qui permettent de mettre en mouvement l'eau contenue dans le dispositif 1.

Afin d'éviter toute surpression due à l'injection d'eau fraiche dans le volume central creux 11, le dispositif comporte une ou plusieurs bouches d'évacuation d'eau 36 à travers lesquelles le surplus d'eau du volume central creux 11 est automatiquement évacué pour compenser l'entrée d'eau fraiche, assurant ainsi le renouvellement de l'eau à l'intérieur du dispositif.

Ces bouches d'évacuation 36, préférentiellement équipées d'un grillage ou d'un filet pour empêcher les animaux captifs de s'échapper, sont ménagées à travers les portions de membrane 7, de préférence à une hauteur intermédiaire du dispositif 1, afin de ne pas être suffisamment hautes pour permettre l'entrée de parasites présents dans l'eau de faible profondeur, ni suffisamment basses pour perturber la sédimentation et la collecte des effluents en créant des mouvements d'eau à ce niveau. Ces bouches d'évacuations 36 peuvent ainsi être placées dans la partie basse de la portion de membrane médiane 9 et/ou dans la partie haute de la portion de membrane inférieure 10 (comme dans l'exemple représenté sur la figure 3).

Chacune de ces bouches d'évacuation 36 est préférentiellement prolongée, à l'extérieur de la portion de membrane 7 correspondante, par un tube 37 en matériau souple, ouvert à ses extrémités, qui sert de clapet pour fermer et ouvrir cette bouche d'évacuation 36 en fonction de la différence de pression entre volume central creux 11 et l'extérieur du dispositif 1. Lorsqu'une surpression existe dans le volume central creux 11, l'eau passant à travers la bouche d'évacuation 36 vient gonfler le tube 37 et s'échappe par l'extrémité ouverte du tube 37. Lorsque la pression diminue, le tube 37 retombe peu à peu, jusqu'à venir se plaquer contre la portion de membrane 7 quand il n'existe plus de surpression, refermant ainsi la bouche d'évacuation 36.

Comme indiqué précédemment, on constate sur les figures que les structures annulaires médianes haute 4 et basse 5, qui ne sont pas visibles à la surface 19, sont celles qui présentent le diamètre le plus important de manière à garantir une zone d'élevage immergée de grand volume.

Sur les exemples représentés, le diamètre de la structure annulaire médiane haute 4 est plus grand que celui de la structure annulaire médiane basse 5. Selon les variantes, l'inverse est également possible. Il convient néanmoins de veiller à ce que la pente de la rampe inclinée 30 formée par la partie inférieure de la portion de membrane inférieure 10 soit suffisante pour réaliser la collecte des effluents de façon satisfaisante.

De la même façon, sur les exemples représentés le diamètre de la structure annulaire supérieure 3 est plus grand que celui de la structure annulaire inférieure 6, mais l'inverse peut également être envisagé.

## Revendications

1. Dispositif d'élevage aquacole (1), de type cage fermée, pouvant être alternativement replié pour son stockage ou son transport, ou déployé pour son utilisation, dispositif comprenant :
- au moins quatre structures annulaires (2) de diamètres différents, dont une structure annulaire supérieure (3), une structure annulaire médiane haute (4), une structure annulaire médiane basse (5) et une structure annulaire inférieure (6), ces structures étant emboîtables les unes dans les autres à l'état replié du dispositif (1) et étant disposées coaxialement l'une au-dessus de l'autre à l'état déployé du dispositif (1);
- au moins trois portions de membrane (7) imperméables à l'eau, dont une portion de membrane supérieure (8), une portion de membrane médiane (9) et une portion de membrane inférieure (10), qui relient chacune deux structures annulaires (2) consécutives et se succèdent de manière étanche, chacune de ces portions de membrane (7) présentant la forme d'un tronçon d'hyperboloïde de révolution à l'état déployé du dispositif ; et
- un élément d'obturation (12) qui ferme le dispositif (1) en partie inférieure (13) ;
l'ensemble de ces portions de membrane (7) et de l'élément d'obturation (12) délimitant un volume central creux (11) apte à contenir de l'eau et à servir de zone d'élevage aquacole.

2. Dispositif d'élevage aquacole (1) selon la revendication 1, ***caractérisé en ce que*** dans leur plan principal la structure annulaire supérieure (3), la structure annulaire médiane haute (4), la structure annulaire médiane basse (5) et la structure annulaire inférieure (6) ont chacune, indépendamment les unes des autres, une forme circulaire ou polygonale ou correspondant à une portion de cercle suivie d'au moins un segment droit, et présentent chacune une interface de fixation circulaire des portions de membranes (7) correspondantes.

3. Dispositif d'élevage aquacole (1) selon la revendication 1, ***caractérisé en ce que*** les diamètres de la structure annulaire médiane basse (5) et de la structure annulaire médiane haute (4) sont supérieurs aux diamètres de la structure annulaire inférieure (6) et de la structure annulaire supérieure (3).

4. Dispositif d'élevage aquacole (1) selon l'une quelconque des revendications précédentes, ***caractérisé en ce que,*** en utilisation, la structure annulaire supérieure (3) et la structure annulaire médiane haute (4) sont des structures à densité inférieure à celle de l'eau, tandis que la structure annulaire médiane basse (5) et la structure annulaire inférieure (6) sont des structures à densité supérieure à celle de l'eau, l'ensemble de ces structures annulaires (2) étant préférentiellement ballastables.

5. Dispositif d'élevage aquacole (1) selon l'une quelconque des revendications précédentes, ***caractérisé en ce que*** les portions de membranes (7) sont en étoffe textile associée à une couche polymérique.

6. Dispositif d'élevage aquacole (1) selon l'une quelconque des revendications précédentes, ***caractérisé en ce qu*'**il comporte en outre des armatures ou des câbles (21) qui relient au moins deux structures annulaires (2) entre elles.

7. Dispositif d'élevage aquacole (1) selon l'une quelconque des revendications précédentes, ***caractérisé en ce qu*'**il comporte en outre des lignes d'ancrage (20) permettant de fixer le dispositif (1) au sol subaquatique.

8. Dispositif d'élevage aquacole (1) selon l'une quelconque des revendications précédentes, ***caractérisé en ce qu***'il comprend en outre au moins une pompe (32) destinée à alimenter le volume central creux (11) en eau aspirée à l'extérieur du dispositif (1) ; et au moins une bouche d'évacuation d'eau (36) située dans une portion de membrane (7) ou dans l'élément d'obturation (12) afin de limiter la surpression à l'intérieur du dispositif (1), cette bouche d'évacuation d'eau (36) étant préférentiellement prolongée par un tube (37) s'étendant à l'extérieur de la portion de membrane (7) ou de l'élément d'obturation (12).

9. Dispositif d'élevage aquacole (1) selon la revendication précédente, ***caractérisé en ce qu**'*il comprend en outre au moins une colonne de distribution (23) qui, à l'état déployé du dispositif (1), est liée à au moins une structure annulaire (2), de préférence la structure annulaire supérieure (3), et s'étend dans le volume central creux (11), cette colonne de distribution (23) recevant l'eau aspirée par la pompe (32) et comportant des ouvertures (33) à travers lesquelles ladite eau sort de la colonne de distribution (23) pour aller dans le volume central creux (11).

10. Dispositif d'élevage aquacole (1) selon la revendication précédente, ***caractérisé en ce que*** les ouvertures (33) sont équipées de buses (34) orientées de manière à envoyer ladite eau dans le volume central creux (11) avec un mouvement rotationnel et/ou ***en ce que*** le dispositif comporte en outre au moins un propulseur (35) fixé à une portion de membrane (7) et prévu pour conférer un mouvement rotationnel à l'eau se trouvant dans le volume central creux (11).

11. Dispositif d'élevage aquacole (1) selon la revendication 9 ou 10, ***caractérisé en ce que*** ladite colonne de distribution (23) comprend une partie supérieure flottante (24), qui renferme préférentiellement une machine de nourrissage (25).

12. Dispositif d'élevage aquacole (1) selon l'une quelconque des revendications 9 à 11, ***caractérisé en ce que*** ladite colonne de distribution (23) s'étend sensiblement verticalement dans le volume central creux (11) et comporte une partie principale tubulaire (26) formée d'une succession de tronçons de membrane (28) chacun en forme d'hyperboloïde de révolution.

13. Dispositif d'élevage aquacole (1) selon l'une quelconque des revendications 9 à 12, ***caractérisé en ce que*** l'élément d'obturation (12) est une jupe (15) qui s'étend de la partie inférieure de ladite colonne de distribution (23) à la structure annulaire inférieure (6).

14. Dispositif d'élevage aquacole (1) selon l'une quelconque des revendications précédentes, ***caractérisé en ce que*** la partie inférieure de la portion de membrane inférieure (10) et l'élément d'obturation (12) sont orientés de manière à former des rampes inclinées vers le bas (29, 30) qui convergent l'une vers l'autre, créant ainsi une zone de collecte (31) des effluents.

15. Dispositif d'élevage aquacole (1) selon l'une quelconque des revendications précédentes, ***caractérisé en ce que*** l'élément d'obturation (12) est amovible ou susceptible d'être ouvert.

16. Dispositif d'élevage aquacole (1) selon l'une quelconque des revendications précédentes, ***caractérisé en ce qu*'**il comporte un autre élément d'obturation (12) qui ferme le dispositif (1) en partie supérieure (16).

## Patentansprüche

1. Aquakulturanlage (1) in Form eines geschlossenen Käfigs, die zur Lagerung oder zum Transport zusammenfaltbar bzw. zum Einsatz auffaltbar ist, wobei die Anlage umfasst:
- mindestens vier ringförmige Strukturen (2) mit unterschiedlichen Durchmessern, darunter eine obere ringförmige Struktur (3), eine oben gelegene mittlere ringförmige Struktur (4), eine unten gelegene mittlere ringförmige Struktur (5) und eine untere ringförmige Struktur (6), wobei diese Strukturen im zusammengefalteten Zustand der Anlage (1) ineinandergesteckt werden können und im aufgefalteten Zustand der Anlage (1) koaxial übereinander angeordnet sind;
- mindestens drei wasserdichte Membranteilstücke (7), darunter ein oberes Membranteilstück (8), ein mittleres Membranteilstück (9) und ein unteres Membranteilstück (10), die jeweils zwei aufeinanderfolgende ringförmige Strukturen (2) miteinander verbinden und dicht aneinander anschließen, wobei jedes dieser Membranteilstücke (7) im aufgefalteten Zustand der Anlage die Form eines Teilstücks eines Rotationshyperboloids aufweist; und
- ein Verschlusselement (12), das die Anlage (1) im unteren Bereich (13) verschließt;
wobei diese Membranteilstücke (7) und das Verschlusselement (12) zusammen einen zentralen Hohlraum (11) bilden, der Wasser aufnehmen und als Gebiet für Aquakultur dienen kann.

2. Aquakulturanlage (1) nach Anspruch 1, ***dadurch gekennzeichnet, dass*** die obere ringförmige Struktur (3), die oben gelegene mittlere ringförmige Struktur (4), die unten gelegene mittlere ringförmige Struktur (5) und die untere ringförmige Struktur (6) in ihrer Hauptebene jeweils unabhängig voneinander eine kreisförmige oder polygonale Form oder eine Form aufweisen, die einem Kreisabschnitt entspricht, an den sich mindestens ein gerades Segment anschließt, und jeweils eine kreisförmige Befestigungsfläche für die entsprechenden Membranteilstücke (7) aufweisen.

3. Aquakulturanlage (1) nach Anspruch 1, ***dadurch gekennzeichnet, dass*** die Durchmesser der unten gelegenen mittleren ringförmigen Struktur (5) und der oben gelegenen mittleren ringförmigen Struktur (4) größer sind als die Durchmesser der unteren ringförmigen Struktur (6) und der oberen ringförmigen Struktur (3).

4. Aquakulturanlage (1) nach einem der vorstehenden Ansprüche, ***dadurch gekennzeichnet, dass*** während der Nutzung die obere ringförmige Struktur (3) und die oben gelegene mittlere ringförmige Struktur (4) Strukturen mit einer Dichte sind, die geringer ist als die von Wasser, während die unten gelegene mittlere ringförmige Struktur (5) und die untere ringförmige Struktur (6) Strukturen mit einer Dichte sind, die größer ist als die von Wasser, wobei alle diese ringförmigen Strukturen (2) vorzugsweise mit Ballast befüllbar sind.

5. Aquakulturanlage (1) nach einem der vorstehenden Ansprüche, ***dadurch gekennzeichnet, dass*** die Membranteilstücke (7) aus einem Textilgewebe bestehen, auf das eine Polymerschicht aufgebracht ist.

6. Aquakulturanlage (1) nach einem der vorstehenden Ansprüche, ***dadurch gekennzeichnet, dass*** sie außerdem Verbindungen oder Seile (21) umfasst, die mindestens zwei ringförmige Strukturen (2) miteinander verbinden.

7. Aquakulturanlage (1) nach einem der vorstehenden Ansprüche, ***dadurch gekennzeichnet, dass*** sie außerdem Verankerungsleinen (20) umfasst, mit denen die Anlage (1) an dem unter Wasser liegenden Boden befestigt werden kann.

8. Aquakulturanlage (1) nach einem der vorstehenden Ansprüche, ***dadurch gekennzeichnet, dass*** sie ferner mindestens eine Pumpe (32) umfasst, die dazu bestimmt ist, den zentralen Hohlraum (11) mit Wasser zu versorgen, das von außerhalb der Anlage (1) angesaugt wird; sowie mindestens einen Wasserauslass (36), der in einem Membranteilstück (7) oder im Verschlusselement (12) angeordnet ist, um den Überdruck im Inneren der Anlage (1) zu begrenzen, wobei dieser Wasserauslass (36) vorzugsweise durch ein Rohr (37) verlängert wird, das sich von dem Membranteilstück (7) oder dem Verschlusselement (12) nach außen erstreckt.

9. Aquakulturanlage (1) nach dem vorstehenden Anspruch, ***dadurch gekennzeichnet, dass*** sie ferner mindestens eine Verteilersäule (23) umfasst, die im aufgefalteten Zustand der Anlage (1) mit mindestens einer ringförmigen Struktur (2), vorzugsweise der oberen ringförmigen Struktur (3), verbunden ist und sich in den zentralen Hohlraum (11) erstreckt, wobei diese Verteilersäule (23) das von der Pumpe (32) angesaugte Wasser aufnimmt und Öffnungen (33) aufweist, durch die das Wasser aus der Verteilersäule (23) in den zentralen Hohlraum (11) austritt.

10. Aquakulturanlage (1) nach dem vorstehenden Anspruch, ***dadurch gekennzeichnet, dass*** die Öffnungen (33) mit Düsen (34) versehen sind, die so ausgerichtet sind, dass sie das Wasser mit einer Drehbewegung in den zentralen Hohlraum (11) leiten, und/oder ***dass*** die Anlage außerdem mindestens einen Propeller (35) umfasst, der an einem Membranteilstück (7) befestigt ist und dazu dient, dem im zentralen Hohlraum (11) befindlichen Wasser eine Drehbewegung zu verleihen.

11. Aquakulturanlage (1) nach Anspruch 9 oder 10, ***dadurch gekennzeichnet, dass*** die Verteilersäule (23) einen schwimmenden oberen Bereich (24) umfasst, der vorzugsweise einen Futterautomaten (25) enthält.

12. Aquakulturanlage (1) nach einem der Ansprüche 9 bis 11, ***dadurch gekennzeichnet, dass*** sich die Verteilersäule (23) im Wesentlichen senkrecht im zentralen Hohlraum (11) erstreckt und einen rohrförmigen Hauptteil (26) umfasst, der aus einer Abfolge von Membranteilstücken (28) gebildet wird, die jeweils die Form eines Rotationshyperboloids aufweisen.

13. Aquakulturanlage (1) nach einem der Ansprüche 9 bis 12, ***dadurch gekennzeichnet, dass*** es sich bei dem Verschlusselement (12) um eine Schürze (15) handelt, die sich vom unteren Bereich der Verteilersäule (23) bis zur unteren ringförmigen Struktur (6) erstreckt.

14. Aquakulturanlage (1) nach einem der vorstehenden Ansprüche, ***dadurch gekennzeichnet, dass*** der untere Bereich des unteren Membranteilstücks (10) und das Verschlusselement (12) so ausgerichtet sind, dass sie nach unten geneigte Rampen (29, 30) bilden, die zueinander hin konvergieren und so einen Sammelbereich (31) für die Ableitungen schaffen.

15. Aquakulturanlage (1) nach einem der vorstehenden Ansprüche, ***dadurch gekennzeichnet, dass*** das Verschlusselement (12) entfernbar oder zu öffnen ist.

16. Aquakulturanlage (1) nach einem der vorstehenden Ansprüche, ***dadurch gekennzeichnet, dass*** sie ein zusätzliches Verschlusselement (12) umfasst, das die Anlage (1) in ihrem oberen Bereich (16) verschließt.

## Claims

1. An aquaculture farming device (1), of the closed-cage type, which can be either folded for storage or transport, or deployed for use, device comprising:
- at least four annular structures (2) of different diameters, including an upper annular structure (3), an upper middle annular structure (4), a lower middle annular structure (5) and a lower annular structure (6), these structures being nestable in the folded state of the device (1) and being arranged coaxially one above the other in the deployed state of the device (1);
- at least three membrane portions (7), which are impermeable to water, including an upper membrane portion (8), a middle membrane portion (9) and a lower membrane portion (10), which each connect two consecutive annular structures (2) and follow on from one another in a sealed manner, each of these membrane portions (7) having the shape of a section of a hyperboloid of revolution when the device deployed state; and
- a closure element (12) which closes the lower part (13) of the device (1);
these membrane portions (7) and the closure element (12) jointly define a hollow central volume (11) capable of containing water and of being used as an aquaculture farming zone.

2. The aquaculture farming device (1) according to claim 1, ***characterised in that*** in their main plane the upper annular structure (3), the upper middle annular structure (4), the lower middle annular structure (5) and the lower annular structure (6) each have, independently of each other, a circular or polygonal shape or corresponding to a portion of a circle followed by at least one straight segment, and each have a circular fastening interface for the corresponding membrane portions (7).

3. The aquaculture farming device (1) according to claim 1, ***characterised in that*** the diameters of the lower middle annular structure (5) and the upper middle annular structure (4) are greater than the diameters of the lower annular structure (6) and the upper annular structure (3).

4. The aquaculture farming device (1) according to any preceding claim, ***characterised in that,*** in use, the upper annular structure (3) and the upper middle annular structure (4) are structures with a density lower than that of water, while the lower middle annular structure (5) and the lower annular structure (6) are structures with a density higher than that of water, all of these annular structures (2) preferably being ballastable.

5. The aquaculture farming device (1) according to any one of the preceding claims, ***characterised in that*** the membrane portions (7) are made of textile fabric associated with a polymeric layer.

6. The aquaculture farming device (1) according to any one of the preceding claims, ***characterised in that*** it further comprises reinforcements or cables (21) that connect at least two annular structures (2) together.

7. The aquaculture farming device (1) according to any one of the preceding claims, ***characterised in that*** it further comprises anchoring lines (20) for fixing the device (1) to the underwater ground.

8. The aquaculture farming device (1) according to any one of the preceding claims, ***characterised in that it*** further comprises at least one pump (32) intended to supply the hollow central volume (11) with water drawn from outside the device (1); and at least one water outlet (36) located in a membrane portion (7) or in the closure element (12) in order to limit the overpressure inside the device (1), this water outlet (36) preferably being extended by a tube (37) extending outside the membrane portion (7) or the closure element (12).

9. The aquaculture farming device (1) according to the preceding claim, ***characterised in that it*** further comprises at least one distribution column (23) which, in the deployed state of the device (1), is connected to at least one annular structure (2), preferably the upper annular structure (3), and extends into the hollow central volume (11), this distribution column (23) receiving the water sucked by the pump (32) and comprising openings (33) through which said water leaves the distribution column (23) to go into the hollow central volume (11).

10. The aquaculture farming device (1) according to the preceding claim, ***characterised in that*** the openings (33) are equipped with nozzles (34) oriented so as to send said water into the hollow central volume (11) with a rotational movement and/or ***in that*** the device further comprises at least one propeller (35) fixed to a membrane portion (7) and provided to impart a rotational movement to the water located in the hollow central volume (11).

11. The aquaculture farming device (1) according to claim 9 or 10, ***characterised in that*** said distribution column (23) comprises a floating upper part (24), which preferably encloses a feeding machine (25).

12. The aquaculture farming device (1) according to any one of claims 9 to 11*, **characterised in that*** said distribution column (23) extends substantially vertically in the hollow central volume (11) and comprises a tubular main part (26) formed by a succession of membrane sections (28) each in the form of a hyperboloid of revolution.

13. The aquaculture farming device (1) according to any one of claims 9 to 12*, **characterised in that*** the closure element (12) is a skirt (15) which extends from the lower part of said distribution column (23) to the lower annular structure (6).

14. The aquaculture farming device (1) according to any preceding claim, ***characterised in that*** the lower portion of the lower membrane portion (10) and the closure element (12) are oriented so as to form downwardly inclined ramps (29, 30) that converge towards each other, thereby creating an effluent collection zone (31).

15. The aquaculture farming device (1) according to any one of the preceding claims, ***characterised in that*** the closure element (12) is removable or openable.

16. The aquaculture farming device (1) according to any one of the preceding claims, ***characterised in that*** it has another closure element (12) that closes the device (1) at the top (16).
